Europäisches Patentamt

European Patent Office

Office européen des brevets

(19)

(11) Publication number: **0 020 102**
**B1**

(12) **EUROPEAN PATENT SPECIFICATION**

(45) Date of publication of patent specification: **08.01.86**

(21) Application number: **80301710.2**

(22) Date of filing: **22.05.80**

(51) Int. Cl.⁴: **C 04 B 26/12,** C 08 L 61/10,
E 04 D 1/00

(54) **Improvements in methods of manufacturing building products from moulding compositions.**

(30) Priority: **23.05.79 GB 7917939**

(43) Date of publication of application:
**10.12.80 Bulletin 80/25**

(45) Publication of the grant of the patent:
**08.01.86 Bulletin 86/02**

(84) Designated Contracting States:
**AT BE CH DE IT LI LU NL SE**

(56) References cited:
**DD-A- 433**
**DE-B-1 961 763**
**DE-B-2 119 089**
**GB-A-1 156 205**
**GB-A-1 394 806**
**GB-A-1 474 945**
**US-A-3 956 227**
**US-A-3 966 670**

(73) Proprietor: **REDLAND TECHNOLOGY LIMITED**
**Redland House**
**Reigate Surrey RH2 0SJ (GB)**

(72) Inventor: **Maxfield, John**
**29 Jubilee Way**
**Storrington Sussex (GB)**
Inventor: **Sinton, Bernard**
**"Kinsale" 28 Kennedy Road**
**Horsham West Sussex (GB)**

(74) Representative: **Mayes, Stuart David et al**
**BOULT, WADE & TENNANT 27 Furnival Street**
**London, EC4A 1PQ (GB)**

Courier Press, Leamington Spa, England.

## Description

This invention relates to methods of manufacturing building products, particularly building products in the form of artificial slates suitable for use outdoors as roofing or cladding materials. Such products are manufactured from moulding compositions containing synthetic resins.

Over the years, considerable development of synthetic resin moulding materials has resulted in their use for all kinds of building products for both internal and external applications.

Polyester resins, for example, have proven to be readily acceptable for use as constituents in moulding compositions partly because of their cost and ease of processing as compared with other resins, for example phenolic resins.

However, for any materials used as building products, there are stringent fire performances to be met and polyester resins, although suitable for some applications, normally burn quite readily and must therefore have fire retardants admix thereto for certain applications. Such fire retardants whilst reducing the fire hazard add disproportionately to the overall cost of the article manufactured from a polyster resin based composition.

One such polyester resin based moulding composition is disclosed in British Patent No. 1156205 where there is described a method of manufacturing a building product for outdoor use wherein finally divided inorganic mineral filler, synthetic thermosetting resin and fibrous material are mixed together and pressed and cured to form a product. The particular resins described in that patent are polyester, epoxy or acrylic resins.

While polyester resins themselves were cheaper and easier to process than phenolic resins, it was not always a practical proposition to develop phenolic resin moulding materials for use in constructional and building products.

Phenolic resin moulding materials have found acceptance with some applications, particularly formed phenolic resins, and several processing routes for moulding products therefrom have been proposed. It has been found, however, that most of the proposed systems use too much resin or give a finished product which does not meet the property requirements of natural building components, for example, slates, or even the properties of the artificial slate such as that described in British Patent No. 1156205 and marketed under the registered trade mark "Petrarch".

Examples of the use of phenolic resins in moulding compositions are described in British Patents 1394806 and 1474945. In 1394806, there is described a moulding composition which includes a phenolic resin mixture consisting of novolak and resole resins and also includes an aromatic carboxylic acid. The resins described are typical in that the novolak is solid and the resole is liquid at ambient temperature. The moulding composition includes relatively high proportions of the resin mix but in the resin mix, there are relatively low proportions of resole resin. The specification also states that the acid is essential to the process in order to achieve acceptable hardening times of the moulding compositions and reasonable mechanical properties. It is a disadvantage of the moulding composition as described in Patent 1394806 that the resin content proposed is unacceptably high for the commercial production of building products.

In Patent 1474945, there is described a powdered facing agent which is produced by first forming a moulding composition including a phenolic resin mixture consisting of novolak and resole resins. The moulding composition in Patent 1474945 is formed only as a step towards making the powdered facing agent and there is no discussion in that patent as to whether a similar mixture would have any suitability for the production of building products. In fact, the products described would not be suitable because they do not include any fibre content and clearly the addition of fibres to the mixture of Patent 1474945 was not contemplated in that specification because such addition would render the mixture completely unsuitable for making into a powdered facing agent with which the patent is concerned.

A disadvantage of the products formed from moulding compositions described in the above two patents and of other phenolic resin based moulding materials developed hitherto has been the inherent lack of durability of products made therefrom. For example, cladding panels and roofing tiles have been made from such compositions but these have suffered from ultra violet attack resulting in loss of flexural strength. In addition, inclement weather conditions have resulted in delamination and break up of the tiles over a period of time.

This lack of durability of phenolic based products has been known for many years and we have now discovered, that this may be due to the inability to produce finished products with little or no void cement. Voids in moulded products appear to contribute to the formation of cracks in inclement weather conditions and the eventual deterioration and break up of the products. To overcome this problem, the product of the present invention is characterized by a water absorption after 24 hours of less than 1% by weight.

However, with the cost of polyester resins rising because of the rise in World demand and short supply thereof and with the general rise in standard set by Governmental Authorities in in respect of fire performance and durability for building products, it has become an attractive proportion to consider alternative materials. The present invention has solved the problem of producing an acceptable building product for external use using a phenolic resin based moulding composition.

Accordingly, the present invention is characterized in that a dough moulding composition comprising from 55 to 89.5% by weight of inorganic mineral filler, 0.5 to 15% by weight of glass fibres and 10 to 30% by weight of a phenolic resin mixture consisting of 40 to 60% of a resole resin in liuqid form and 60 to 40% of a novolak resin in solid form, is formed by mixing together the filler, fibres and resins for a time sufficient to give a resultant composition having a dough like consistency and thereafter the composition is pressed in a mould at a mould pressure to form a cured product, said product having a water absorption after 24 hours of less than 1% by weight.

It is preferred that the dough moulding composition is formed by mixing together the novolak resin and the inorganic mineral filler, wetting out by addition to the mixture of the resole resin and adding to the mixture the glass fibres. It has been found that this order of mixing produces the most satisfactory dough like mixture.

Preferably the composition is pressed in the mould at a mould pressure of 0.34 to 4.27 MN/m² and at a platen temperature of from 110°C to 190°C and for 1 to 30 minutes. In a preferred embodiment, the mould pressure is 1.4 MN/m², the platen temperature is 150°C and the pressing is for from 2 to 4 minutes. It is found that under these conditions, the pressing and curing time is reduced to a figure which is acceptable for commercial purposes.

Preferably the phenolic resin mixture of the dough moulding composition consists of approximately equal parts of each resin. In one embodiment, the dough moulding composition may comprise 17% by weight of the resin mixture, the resin mixture consisting of 8% by weight of powdered novolak resin and 9% by weight in the liquid resole resin.

An amino-silane coupling agent may be added to the composition and not more than 5% by weight of pigment may also be added.

Preferably the composition comprises from 15 to 25% by weight of the resin mixture.

There now follows by way of example of the invention a detailed description of a composition according to the invention.

The following constituents were mixed together in a standard two blade Winkworth mixer:—

(a) 8% by weight solid novolak resin powder which contained approximately 2% by weight of the novolak resin, of an amino-silane coupling agent.

(b) 9% by weight liquid resole resin;

(c) 2.5% by weight chopped glass rovings of 25 mm length, the roving being MSS1618 available from Fibreglass Limited;

(d) 1% of black pigment, viz Bayer 320; and,

(e) 79.5% by weight of inorganic mineral filler, i.e. slate powder, viz Delabole slate grade S12, a material with a wide distribution of particles sizes. (Bayer is a Registered Trade Mark)

The novolak resin powder and slate powder were first mixed together. The liquid resole resin was added to wet out the mixture and finally the glass roving and pigment added.

The resultant dough like mixture was then extruded and subdivided into preforms of controlled weight for loading into the mould cavities of a platen press where it was pressed at a pressure of 1.4 MN/m² for 3 minutes at a platen temperature of 156°C to give a 30 cm sq product of approximately 3 to 4 mm thick.

Venting of the mould during pressing was effected for ten seconds at one minute intervals to release condensation vapours.

The resulting properties of the product were:—
(i) Dry flexural strength:— 44.3 MN/m²
(ii) Wet flexural strength after 24 hours water absorption:— 45.7 MN/m²
(iii) 24 hours water absorption:— 0.06% by weight (when tested according to British Standard 680 Part, 2, 1971).

Normally of course one would expect a lower flexural strength after water absorption. However, such is the quality of the product that water absorption is very low and figures for flexural strength of 42 to 48 MN/m² are readily obtained.

It has been found that an artificial slate made by the process disclosed, and from the composition set out in the example, has a greatly reduced void content when compared to products made from phenolic based resin compositions processed by other routes.

Indeed it has been found that the void content is as low as that to be found in natural materials and the artificial slate material of the aforementioned British Patent No. 1156205.

It is this lack of voids which it is believed contributes particularly to the strength of the material and the apparent durability thereof.

Although slate powder is utilised in the composition any inorganic mineral filler may be included depending upon the charactersitics of the product to the manufactured.

Whereas the mixing of the constituents of the dough moulding composition was said to be in one particular succession of addition of the constituents it is to be realised that the mixing may take place in any suitable order.

The composition described may be used to form many building products and is particularly suitable for making a product such as that described in our co-pending Application No. 7917940 dated 23rd May, 1979 (EP—A—0 020 103) and entitled "An Improved Roofing Tile".

## Claims

1. A method of manufacturing a building product for outdoor use as an artificial slate wherein finely divided inorganic mineral filler, synthetic thermosetting resin and fibrous material are mixed together and pressed and cured to form a product characterized in that a dough moulding composition comprising from 55 to 89.5% by weight of inorganic mineral filler, 0.5 to 15% by weight of glass fibres and 10 to 30% by weight of a phenolic resin mixture consisting of 40 to 60% of a resole resin in liquid form and 60 to 40% of a novalak resin in solid form is formed by mixing together the filler, fibres and resins for a time sufficient to give a resultant composition having a dough like consistency and threafter the composition is pressed in a mould at a mould pressure to form a cured product, said product having a water absorption after 24 hours of less than 1% by weight.

2. A method as claimed in claim 1 characterized in that the dough moulding composition is formed by mixing together the novalak resin and the inorganic mineral filler, wetting out by addition to the mixture of the resole resin and adding to the mixture the glass fibres.

3. A method as claimed in claim 1 or claim 2 further characterized in that the composition is pressed in the mould at a platen temperature of from 110°C to 190°C and for 1 to 30 minutes.

4. A method as claimed in claim 3 characterized in that the mould pressure is 1—4 MN/m², the platen temperature is 150°C and the pressing is for from 2 to 4 minutes.

5. A method as claimed in any one of the preceding claims characterized in that the dough moulding composition comprises a phenolic resin mixture consisting of approximately equal parts of each resin.

6. A method as claimed in any one of the preceding claims characterized in that the dough moulding composition comprises 17% by weight of the resin mixture, the resin mixture consisting of 8% by weight of powdered novolak resin and 9% by weight of the liquid resole resin.

7. A method as claimed in any one of the preceding claims characterized in that the dough moulding composition further comprises an amino-silane coupling agent.

8. A method as claimed in any one of the preceding claims characterized in that the dough moulding composition further comprises not more than 5% by weight of pigment.

9. A method as claimed in any one of the preceding claims characterized in that the dough moulding composition comprises from 15 to 25% by weight of the resin mixture.

**Revendications**

1. Procédé de fabrication d'un matériau de construction destiné à l'usage à l'extérieur, sous forme d'une ardoise artificielle, conformément auquel on mélange les uns aux autres une charge minérale inorganique finement divisée, une résine thermodurcissable synthétique et une matière fibreuse et on les comprime et durcit pour former un produit, caractérisé en ce que l'on forme une composition de moulage sous forme de pâte comprenant de 55 à 89,5 % en poids d'une charge minérale inorganique, de 0,5 à 15 % en poids de fibres de verre et de 10 à 30 % en poids d'un mélange de résines phénoliques constitué de 40 à 60 % d'une résine de résole sous forme liquide et de 60 à 40 % d'une résine novolaque sous forme solide, en mélangeant les unes aux autres, la charge, les fibres et les résines pendant une période qui suffit à engendrer une composition résultante possédant une consistance analogue à celle d'une pâte et on comprime ensuite la composition dans un moule à une certaine pression de moule pour former un produit durci, le produit en question possédant une absorption d'eau après 24 heures inférieure à 1 % en poids.

2. Procédé suivant la revendication 1, caractérisé en ce que l'on forme la composition de moulage sous forme de pâte en mélangeant l'une à l'autre la résine novolaque et la charge minérale inorganique, en mouillant le mélange par l'addition à ce dernier de la résine de résole et en ajoutant les fibres de verre au mélange ainsi obtenu.

3. Procédé suivant la revendication 1 ou la revendication 2, également caractérisé en ce que l'on comprime la composition dans le moule à une température des plateaux de 110°C à 190°C pendant une période qui varie de une à 30 minutes.

4. Procédé suivant la revendication 3, caractérisé en ce que la pression du moule est de 1—4 MN/m², la température des plateaux est de 150°C et la pression s'effectue pendant une période qui fluctue de 2 à 4 minutes.

5. Procédé suivant l'une quelconque des revendications précédentes, caractérisé en ce que la composition de moulage sous forme de pâte comprend un mélange de résines phénoliques constitué de parties approximativement égales de chacune des résines.

6. Procédé suivant l'une quelconque des revendications précédentes, caractérisé en ce que la composition de moulage sous forme de pâte comprend 17 % en poids du mélange des résines, le mélange des résines étant constitué de 8 % en poids de résine novolaque pulvérulente et de 9 % en poids de la résine de résole liquide.

7. Procédé suivant l'une quelconque des revendications précédentes, caractérisé en ce que la composition de moulage sous forme de pâte comprend également un agent de couplage du type amino-silane.

8. Procédé suivant l'une quelconque des revendications précédentes, caractérisé en ce que la composition de moulage sous forme de pâte comprend, au surplus, une quantité de pigment non supérieure à 5 % en poids.

9. Procédé suivant l'une quelconque des revendications précédentes, caractérisé en ce que la composition de moulage sous forme de pâte comprend de 15 à 25 % en poids du mélange des résines.

**Patentansprüche**

1. Verfahren zur Herstellung eines Bauproduktes zur Außenverwendung als künstlicher Schiefer, bei dem zur Bildung eines Produkts fein verteilter anorganischer mineralischer Füllstoff, synthetisches hitzehärtbares Harz und faseriges Material vermischt und gepreßt und gehärtet werden, dadurch gekennzeichnet, daß eine Teigpreßmasse, die 55 bis 89,5 Gew.-% anorganischen mineralischen Füllstoff, 0,5 bis 15 Gew.-% Glasfasern und 10 bis 30 Gew.-% einer phenolischen Harzmischung aus 40 bis 60 % eines Resolharzes in flüssiger Form und 60 bis 40 % eines Novolakharzes in fester Form enthält, durch Vermischen des Füllstoffes, der Fasern und der Harze während einer Zeit gebildet wird, die ausreicht, um eine resultierende Zusammensetzung zu ergeben, die eine teigartige Konsistenz aufweist, und die Zusammensetzung danach in einer Form unter einem Preßdruck zur Bildung eines gehärteten Produktes preßt, wobei das Produkt eine Wasserabsorption nach 24 Stunden von weniger als 1 Gew.-% besitzt.

2. Verfahren nach Anspruch 1, dadurch gekennzeichnet, daß die Teigpreßmasse gebildet wird durch Vermischen des Novolakharzes und des anorganischen mineralischen Füllstoffes, Imprägnieren durch Zugabe des Resolharzes zur Mischung und Zugabe der Glasfasern zur Mischung.

3. Verfahren nach Anspruch 1 oder 2, weiters dadurch gekennzeichnet, daß die Masse in der Form bei einer Plattentemperatur von 110°C bis 190°C und während 1 bis 30 Minuten gepreßt wird.

4. Verfahren nach Anspruch 3, dadurch gekennzeichnet, daß der Preßdruck 1,4 MN/m² beträgt, die Plattentemperatur 150°C ist und das Pressen 2 bis 4 Minuten lang durchgeführt wird.

5. Verfahren nach einem der vorhergehenden Ansprüche, dadurch gekennzeichnet, daß die Teigpreßmasse eine Phenolharzmischung aus ungefähr gleichen Teilen jedes Harzes enthält.

6. Verfahren nach einem der vorhergehenden Ansprüche, dadurch gekennzeichnet, daß die Teigpreßmasse 17 Gew.-% der Harzmischung enthält, wobei die Harzmischung aus 8 Gew.-% gepulvertem Novolakharz und 9 Gew.-% flüssigem Resolharz besteht.

7. Verfahren nach einem der vorhergehenden Ansprüche, dadurch gekennzeichnet, daß die Teigpreßmasse weiters einen Aminosilan-Haftvermittler enthält.

8. Verfahren nach einem der vorhergehenden Ansprüche, dadurch gekennzeichnet, daß die Teigpreßmasse weiters nicht mehr als 5 Gew.-% Pigment enthält.

9. Verfahren nach einem der vorhergehenden Ansprüche, dadurch gekennzeichnet, daß die Teigpreßmasse 15 bis 25 Gew.-% der Harzmischung enthält.